(19) Europäisches Patentamt
European Patent Office
Office européen des brevets

(11) Publication number: 0 271 035 B1

(12) EUROPEAN PATENT SPECIFICATION

(45) Date of publication of patent specification: 01.09.93 (51) Int. Cl.5: C02F 5/12

(21) Application number: 87118027.9

(22) Date of filing: 05.12.87

The file contains technical information submitted after the application was filed and not included in this specification

# (54) Treatment of aqueous medium with copolymers containing acrylamidoalkane sulfonic acid.

(30) Priority: 08.12.86 US 939333
08.12.86 US 938896
08.12.86 US 939498

(43) Date of publication of application: 15.06.88 Bulletin 88/24

(45) Publication of the grant of the patent: 01.09.93 Bulletin 93/35

(84) Designated Contracting States: AT BE CH DE ES FR GB GR IT LI LU NL SE

(56) References cited:
EP-A- 0 206 814
WO-A-83/02607
US-A- 3 806 367
US-A- 3 898 037
US-A- 4 552 665

(73) Proprietor: The B.F. Goodrich Company
3925 Embassy Parkway
Akron Ohio 44313(US)

(72) Inventor: Amjad, Zahid
32611 Redwood Boulevard
Avon Lake Ohio 44012(US)
Inventor: Masler, William Frank III
1026 Mattingly Road
Hinckley Ohio 44233(US)

(74) Representative: von Kreisler, Alek, Dipl.-Chem. et al
Patentanwälte Von Kreisler-Selting-Werner,
Postfach 10 22 41, Bahnhofsvorplatz 1
D-50462 Köln (DE)

EP 0 271 035 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of inhibitation precipitation of scale in an aqueous medium using a copolymer.

## BACKGROUND OF THE INVENTION

Most industrial waters contain alkaline earth and transition metal cations such as calcium, barium, iron, zinc, manganese, and magnesium, and several anions such as bicarbonate, carbonate, sulfate, phosphate, silicate, and fluoride. When combinations of these anions and cations are present in concentrations which exceed the solubility of their reaction products, precipitates form until these product solubility concentrations are no longer exceeded. For example, when the ionic product of calcium and carbonate exceeds the solubility of calcium carbonate, a solid phase of calcium carbonate will form.

Solubility product concentrations are exceeded for reasons such as partial evaporation of the water phase, change in pH, pressure or temperature, and the introduction of additional ions which form insoluble compounds with the ions already present in the solution.

As these reaction products precipitate on surfaces of the water-carrying system, they form scale or deposits. This accumulation prevents effective heat transfer, interferes with fluid flow, facilitates corrosive processes, and harbors bacteria. This scale is an expensive problem in many industrial water systems, such as recirculating cooling water systems in cooling towers, in that the scale causes delays and shutdowns for cleaning and removal of the scale.

Citric acid, gluconic acid, and other materials have been used in the past to stabilize iron in solution and thus prevent its precipitation in forms such as ferric hydroxide and ferric oxide, wherein iron is in the third oxidation state. Citric acid and such materials effectively maintain iron in solution by forming complexes therewith which are soluble in water and thereby, remain dissolved in water. Although citric acid and cognate materials are effective as stabilizing agents for iron in solution, they are not antiscalants and are ineffective against scale such as calcium carbonate, calcium phosphate, and calcium sulfate.

Furthermore, performance of the prior art chelants is strongly dependent on solution pH. For example, iron (III) stabilization at 2 ppm of citric acid was 79% at pH of 7 but only 2% at pH of 8. In other words, an increase in solution pH from 7 to 8 decreased citric acid performance approximately forty times.

In US-A-3,928,196, a method is disclosed for inhibiting scale formation using two-component copolymers. The copolymers, which contain 5-50 mole percent acrylamidoalkane sulfonic acid and 95-50 mole percent of acrylic acid or a similar acid, have molecular weight of 1,000 to 10,000. The 25/75 mole percent copolymer of acrylamidomethylpropane sulfonic acid (AMPS) and acrylic acid (AA) is equivalent to 49/51 weight ratio whereas the 75/25 mole percent copolymer of AMPS and AA, is equivalent to 89.5/10.5 weight ratio.

US-A-4,552,665 discloses a process for stabilizing dissolved manganese ion and its reaction products in an aqueous solution by adding thereto 0.1 to 20 ppm of a copolymer of an unsaturated carboxylic acid or its salt and an unsaturated sulfonic acid or its salt. Acrylic acid is an example of the unsaturated carboxylic acid and 2-acrylamido-2-methylpropane sulfonic acid (AMPS) is an example of the unsaturated sulfonic acid. The disclosed copolymers include 2-component copolymers and 3-component copolymers or terpolymers.

Common particulate deposits in aqueous medium include iron oxides, calcium and magnesium carbonates, sulfates, oxalates, and phosphates, as well as silt, alumina, aluminum silicates, and clays. Environments where some of the deposition problems are often encountered range from silt and mud accumulation in bottoms of water storage tanks and ballast tanks of vessels and on ships, to the fouling problems which occur in water cooling systems using the once-through or recirculating systems, and to deposition problems which would occur in cooling and boiler water systems if the water were not treated beforehand.

If all particulate matter could be kept dissolved or at least maintained in suspension, if already in solid state, there would never be any deposition problems to contend with. The phenomenon of suspension involves settling of particles in a liquid medium. The parameters which control settling rates are particle size and relative density of liquid and particles. However, once particles have settled, the nature of the resulting sludge is dependent on the attractive forces between the particles and the surfaces which they contact. If the attractive forces between particles are strong, the formed deposit will be dense but if the attractive forces between the particles are weak, deposition is less likely to occur, particularly at flow conditions.

U.S. patents 3,709,815 and 3,709,816 are directed to boiler water treatment and to control of alluvial and other deposits in aqueous systems by the use of homopolymers and copolymers of acrylamido-alkane

sulfonic acid, such as 2-acrylamido-2-methylpropane sulfonic acid or AMPS. The comonomers are selected from water-soluble and water-insoluble monomers. Suitable comonomers include acrylic acid, variants and salts thereof and acrylamide, variants and substituted forms thereof, as well as alkali metal styrene sulfonates and vinyl benzoates, and others. The particulates encompassed by these patents include clay silt, calcium carbonate, hydrated ferric oxide, silica, magnetic iron oxide, calcium carbonate, magnesium carbonate, aluminum silicate, and the like.

U.S. patents 3,806,367 and 3,898,037 issued from the same patent application. U.S. patent 3,806,367 is directed to the removal of rust and tubercules from a metal surface whereas U.S. patent 3,898,037 relates to inhibition of corrosion of a metal surface which is in contact with an aqueous solution. These patents disclose the use of dispersants which are homopolymers and copolymers of acrylamido-alkane sulfonic acid, such as 2-acrylamido-2-methyl propane sulfonic acid or AMPS. The copolymers can be polymers of two or three monomers, one of which is an acrylamidoalkane sulfonic acid. Suitable comonomers include acrylic acid, salts thereof and other versions of same; acrylamide and substituted versions thereof; vinyl compounds; vinyl acids and esters thereof; and the like. The comonomers are more fully described in col. 5 of U.S. patent 3,898,037.

This invention generally relates to inhibition of scale formation. This is accomplished by adding to an aqueous system at least a threshold inhibition amount of a copolymer of at least three different monomers, i.e., monounsaturated carboxylic acid, salts and anhydrides thereof of 3 to 5 carbon atoms, an acrylamidoalkane sulfonic acid and salts thereof, and a primary copolymerizable monomer. The resulting copolymer is soluble in water and is effective in inhibiting precipitation of scale. Scale inhibition herein pertains particularly to calcium scale such as calcium phosphate, calcium sulfate, and calcium carbonate. Metal ion stabilization pertains particularly to iron in the third oxidation stage and dispersion pertains particularly to iron oxide. Inhibition of scale precipitation is accomplished with the herein-defined copolymers which are effective against scale in the presence or the absence of soluble metal ions such as iron, manganese, and zinc. Soluble iron ions referred to herein exist in either the II or the III oxidation state.

## SUMMARY OF THE INVENTION

This invention is directed to the inhibition of precipitation of scale-forming salts in an aqueous medium by addition thereto of an effective threshold inhibition amount of a copolymer which contains at least three different repeating groups.

Thus provided is a method of inhibiting precipitation of scale including calcium phosphate, in an aqueous medium, in the presence or absence of iron, comprising adding to said aqueous medium 0.5 to 500 ppm of an water-soluble copolymer comprising

(a) 20 to 95 % by weight carboxylic monomer selected from acrylic acid, methacrylic acid, salts of such acids and mixtures thereof,

(b) 1 to 60 % by weight of a sulfonic monomer selected from 2-acrylamido-2-methylpropane sulfonic acid, salts of said acid and mixtures thereof,

(c) a copolymerizable primary comonomer selected from styrene sulfonic acids, salts of such acids and mixtures thereof and optionally

(d) up to 20 % by weight of one or more secondary copolymerizable monomers excluding substituted acrylamides, vinyl esters and vinyl acetate,

said copolymerizable primary copolymer being the remainder to 100 % by weight,

said copolymer has a weight average molecular weight in the range of 1,000 to 100,000.

Such copolymers include polymerized monounsaturated carboxylic acid of 3 to 5 carbon atoms and salts thereof, polymerized acrylamidoalkane sulfonic acid, and a primary comonomer selected from acrylamides, alkyl acrylates, vinyl sulfonic acid and salts thereof, hydroxyalkyl acrylates and methacrylates, styrene sulfonic acids and salts thereof, allyloxy hydroxyalkane sulfonic acids and salts thereof, and vinyl carboxylates and hydrolyzed vinyl carboxylates.

## DETAILED DESCRIPTION OF THE INVENTION

The copolymers disclosed herein are effective as water treating agents. More specifically, the copolymers described herein are effective in reducing precipitation of scale-forming salts in aqueous media. Such salts include calcium phosphate, calcium sulfate, barium sulfate, magnesium hydroxide, strontium sulfate, and calcium carbonate and mixtures thereof, and particularly calcium salts such as calcium phosphate. Metal ions contemplated herein include iron (II and III). Amount of such copolymer that is added to an aqueous medium is at least an effective threshold inhibition amount which is in the range of 0.5 to 500

parts per million (ppm) of the aqueous medium, preferably 1 to 50 ppm. Although the aqueous medium can be acidic, in a preferred embodiment, it is neutral or alkaline.

Specific applications contemplated herein where the copolymers can be used include aqueous systems used in recirculating cooling towers, steam boilers, desalination, oil field applications in the secondary oil recovery operations, flash distillation, as well as in aqueous systems such as sugar solutions. The copolymers are effective in reducing precipitation of scale in the presence or the absence of soluble metal ions such as iron, manganese, zinc, and mixtures thereof and mixtures thereof with other metal ions. The copolymers are also effective in stabilizing metal ions in an aqueous system and in dispersing particulate matter therein. Such copolymers are useful as scale inhibitors.

The copolymers can be in unneutralized or neutralized form. Such copolymers can be neutralized with a strong alkali, such as sodium hydroxide, in which instance, the hydrogen of the carboxyl group in the copolymer is replaced with sodium. With the use of an amine neutralizing agent, the hydrogen will be replaced with an ammonium group. Useful copolymers for purposes herein include copolymers that are unneutralized, partially neutralized, and completely neutralized.

The copolymers are soluble in water up to at least about 20% solids concentration, and they must, of course, be soluble in water in amount used, to be effective for the intended purpose. The copolymers contemplated herein are polymers of at least three different monomers and include at least one monomer selected from each one of the following groups (a), (b), and (c):

(a) monounsaturated carboxylic acids of 3 to 5 carbon atoms, salts and anhydrides thereof;

(b) acrylamidoalkane sulfonic acids and salts thereof containing up to 6, preferably 1 to 4, carbon atoms in the alkane moiety; and

(c) primary copolymerizable monomers which aid in the antiscalant effectiveness of the copolymers.

In addition to the above three requisite monomers, a small amount of other or secondary copolymerizable monomers can also be used as long as they do not substantially deleteriously affect performance of the copolymers as antiscalants and excluding substituted acrylamides, vinylesters and vinylacetate. Amount of such seconds copolymerizable mononers can generally vary up to 20 % by weight, preferably up to 10 % by weight and more preferably 2 to 10 % by weight of the final copolymer.

The copolymers suitable herein are random non-crosslinked polymers containing polymerized units of one or more of each of the monomers (a), (b), and (c), identified above, and can contain a small proportion of polymerized units of one or more of the secondary copolymerizable monomers. The copolymers have weight average molecular weight of 1,000 to 100,000 but preferably 2,000 to 20,000. The molecular weight given herein is measured by gel permeation chromatography.

The copolymers disclosed herein contain 20 to 95% by weight of the polymerized carboxylic acid or its salt or anhydride, preferably 40 to 90%; 1 to 60% by weight of the polymerized sulfonic acid or its salt, preferably 10 to 50%; with remainder being one or more of the primary copolymerizable monomers. The copolymers can also include one or more polymerized secondary comonomers.

The carboxylic acid monomers contemplated herein include monounsaturated monocarboxylic acids, salts and anhydrides thereof, such as acrylic acid, methacrylic acid, and mixtures thereof. Preferred in this class are monounsaturated monocarboxylic acids of 3 to 4 carbon atoms and water soluble salts thereof, i.e. acrylic acid and methacrylic acid. Because of its availability, effectiveness and low price, acrylic acid is particularly preferred. Repeating units of acrylic acid, methacrylic acid, and salts thereof are represented as follows:

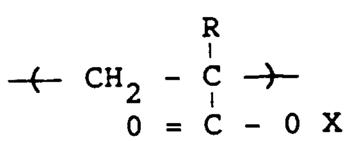

where R is hydrogen or methyl and X can be hydrogen, alkali metal, alkaline earth metal, or ammonium, particularly hydrogen, sodium, potassium, calcium, ammonium, and magnesium.

The repeating unit of acrylamidoalkane sulfonic acid and salts thereof are defined as follows:

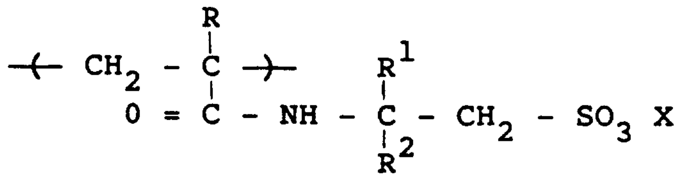

where R is hydrogen or methyl; X is hydrogen, ammonium, alkali metal or an alkaline earth metal, particularly hydrogen, ammonium or an alkali metal; and $R^1$ and $R^2$ are individually selected from hydrogen and alkyl groups of 1 to 4 carbon atoms. In a preferred embodiment, R is hydrogen and $R^1$ and $R^2$ are each an alkyl group of 1 to 3 carbon atoms. In this group of sulfonic acids, 2-acrylamido-2-methylpropane sulfonic acid or AMPS is a commercial, readily available monomer which is especially preferred for the purposes described herein.

The primary copolymerizable monomers are selected from styrene sulfonic acids, salts of such acids and mixtures thereof.

Repeating units of styrene sulfonic acids and salts thereof are defined as follows:

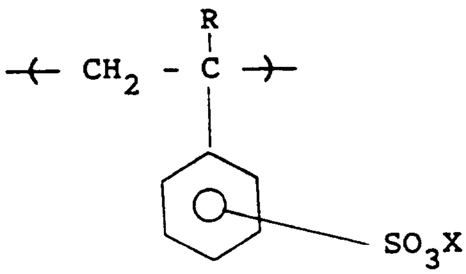

where R is hydrogen or a lower alkyl group of 1 to 6 carbon atoms, preferably hydrogen, and X is alkali metal or alkaline earth metal or ammonium, particularly hydrogen, ammonium or alkali metal. A particularly suitable sulfonic acid is styrene sulfonic acid where R is hydrogen and the $-SO_3X$ group is at the 3 or 4 position on the phenyl ring. The salts of styrene sulfonic acids are water-soluble. The sodium salt of styrene sulfonic acid is available commercially. It is further preferred that R is selected from alkyl groups of 1 to 2 carbon atoms.

The monomers can be prepared, if desired, in a conventional manner but they are commercially available and therefore, can be purchased. Polymerization of the monomers results in an essentially non-crosslinked random copolymer, the molecular weight of which can be adjusted with a little trial and error. The copolymer is preferably formed in a high yield ranging from 50% to 99% by weight of the comonomers.

It is also a requirement that the copolymer be soluble in water. Typically, the copolymer is used in water in the range of 0.5 to 500 ppm. Thus, high solubility of water treatment compositions is not essential but desirable. The product is preferably shipped in drums as a concentrated aqueous solution containing in the range of 20% to 50% by weight of solids per 100 parts of solution, which requires solubility to the extent of at least 20 weight parts per 100 parts of water.

Polymerization of the monomers identified herein can be carried out in a mutual solvent for both, such as in a lower alkanol of 1 to 6 carbon atoms, or in water, with an effective amount of a free radical initiator sufficient to produce the desired composition within an acceptable period of time. The monomeric acids can be used as such or can be in a partially or a completely neutralized from prior to polymerization.

The reaction is conveniently carried out in water as the only reaction medium at a temperature in the range of 30° to 130°C usually at atmospheric or slightly elevated pressure. Though the solubility of certain substituted acrylamides in water is poor, the acrylic acid dissolves the substituted acrylamide first, forming a solution which is added to the water or solvent, allowing the reaction to proceed smoothly. The concentration of the copolymer formed may range from 5% to 50% by weight, based on total solids, which solution can be shipped directly.

The copolymer may also be formed in an acyclic ketone, such as acetone, in an alkanol, in water, or mixtures thereof. If, for example, the copolymer is formed in an organic solvent, or a mixture of an organic

solvent and water, the copolymer is converted from the organic solvent solution to a water solution. Typically, the organic solvent is stripped from the solution with steam or distilled off with subsequent additions of water and repetition of distillation to remove the solvent, followed by the addition of water and a neutralizing agent such as caustic solution, ammonia, a hydrazine, or a low-boiling primary, secondary or tertiary aliphatic amine.

The final aqueous solution of polymer salt is preferably in the range of pH 2 to pH 8, with a total solids content of 5 to 50% by weight of polymer in water.

The copolymers formed may have weight average molecular weight in the range of 1,000 to 100,000, and preferably 2,000 to 20,000, as determined by gel permeation chromatography. The acid numbers of the copolymers formed, as determined by a conventional titration with KOH, may range from 300 to 740, corresponding to a weight fraction of from 40% to 95% by weight of monomer units having COOH groups expressed as acrylic acid. The preferred polymers have more than 50% by weight of free carboxyl groups and an acid number in the range from 390 to 700.

In a typical polymerization process, a glass lined or stainless steel jacketed reactor is charged with predetermined amounts of monomers along with solvent and a free radical polymerization catalyst under a nitrogen blanket, and the reaction mixture allowed to exotherm under controlled temperature conditions maintained by a heat-transfer fluid in the jacket of the reactor. The pressure under which the reaction occurs is not critical, it being convenient to carry it out under atmospheric pressure.

The copolymers described herein in connection with threshold inhibition of salt-forming scales, metal ion stabilization, and/or dispersants of partaiculate matter, can be used in combination with other conventional additives wherever appropriate. Examples of some of the conventional additions include precipitating agents, oxygen scavengers, sequestering agents, corrosion inhibitors, antifoaming agents, and the like.

In reference to scale inhibition, the copolymers formed in the manner described herein were used to treat water which contained calcium ions and phosphate ions in a stirred pH-STAT test while maintaining constant pH and using an automatic tritrator to gauge the effectiveness of the polymer for inhibiting the formation and deposition of calcium phosphate. The test was carried out as follows: a known volume of a phosphate salt solution, such as $Na_2HPO_4$, or another soluble phosphate salt solution, was transferred to a known volume of distilled water in a double-walled glass cell to give a final concentration of 9-10 ppm of orthophosphate ions. To this solution was added slowly and with continuous stirring a known volume of testing polymer solution sufficient to give a dosage of 10 ppm.

A pair of glass and reference electrodes, which were calibrated before and after each experiment with standard buffer solutions of pH 7.00 and 9.00, was then immersed in the solution which was maintained at 50 °C by circulating water through the outside of a glass cell jacket. After 45 minutes, a known volume of calcium chloride solution was slowly added to the continuously stirred solution containing phosphate and polymer, to give a final calcium ion concentration of 140 ppm. The pH of the solution was then immediately brought to pH 8.50 by automatic addition of 0.10M NaOH solution. The pH of the solution was then maintained at 8.50±0.01 throughout the experiment using the pH-stat technique. Solution samples were withdrawn after 22 hours, and analyzed, after filtration through 0.22 micrometer filter paper, for orthophosphate ions using the ascorbic acid method, as described in detail in "Standard Methods for the Examination of Water and Waste Water" 14th edition, prepared and published by American Health Association. The instrument used for the colorimetric measurements was a Beckman 5270 Spectrophotometer.

Tests for calcium sulfate and calcium carbonate were carried out by the method of Ralston, see J. Pet. Tech., August 1969, 1029-1036.

The percent threshold inhibition (TI) attained for each experiment was obtained using the following formula, shown in this case for calcium phosphate:

$$\% \ TI = \frac{(PO_4)\ exp - (PO_4)\ final}{(PO_4)\ initial - (PO_4)\ final} \times 100$$

where

$(PO_4)$ exp = concentration of phosphate ion in the filtrate in presence of the copolymer at time of 22 hours

$(PO_4)$ final = concentration of phosphate ion in filtrate in absence of the copolymer at time 22 hours

$(PO_4)$ initial = concentration of phosphate ion at time zero.

To determine effectiveness of the copolymers as metal ion stabilizers, 1 ml of ferric chloride was added to 100 ml of synthetic water containing 0-5 ppm of the copolymers in a 125 ml glass bottle. The synthetic water used in the metal ion stabilization test was made by mixing standard solutions of calcium chloride, magnesium chloride, sodium bicarbonate, sodium sulfate and sodium chloride. Analysis of the water used in the tests, is given below:

| | |
|---|---|
| Ca | = 300 ppm |
| Mg | = 300 ppm |
| Na | = 1113 ppm |
| Fe | = 1 ppm |
| Cl | = 2,170 ppm |
| $SO_4$ | = 700 ppm |
| $HCO_3$ | = 97 ppm |

The test was run for 2 hours, at room temperature and under static conditions. The solutions were filtered through a 0.22 µm filter and the filtrate was analyzed for soluble metal ion by atomic absorption spectroscopy. Percent metal ion stabilization was calculated as follows, here shown for iron:

$$\%\ \text{iron stabilization} = \frac{\text{iron (exp)} - \text{iron (e)}}{\text{iron (initial)} - \text{iron (e)}} \times 100$$

where:

iron (exp) = concentration of iron in the presence of the copolymer at t = 2 hours
iron (e) = concentration of iron in the absence of the copolymer at t = 2 hours
iron (initial) = concentration of iron at t = 0

Dispersant activity of the copolymers tested herein was measured as a function of time for a particulate concentration of a copolymeric dispersant which was tested in a dilute aqueous solution. In these tests, 0.12 grams of iron oxide was added to an 800 ml beaker containing 600 ml synthetic water and the indicated amount of the copolymer. Synthetic water had the following composition:

| | |
|---|---|
| Ca | = 100 ppm |
| Na | = 314 ppm |
| $SO_4$ | = 200 ppm |
| Mg | = 30 ppm |
| Cl | = 571 ppm |
| $HCO_3$ | = 60 ppm |

The slurries were stirred using 6 paddle stirrer and % transmittance (T) determined at known time using a Brinkmann PC-1000 colorimeter. Dispersancy was measured as a function of amount of iron oxide dispersed. The performance of the polymer was determined by comparing % T values of the slurries containing polymer against control with no polymer. Greater dispersancy was, therefore, indicated by lower % T value which means that the lower % T numbers indicated greater polymer effectiveness.

The invention disclosed herein is demonstrated by the following examples which show preparation of the copolymers and threshold inhibition tests thereof and other related polymers.

EXAMPLE 1 (Comparative)

This example demonstrates preparation of the copolymer of acrylic acid, 2-acrylamido-2-methylpropane sulfonic acid (AMPS), and t-butyl acrylamide in the respective weight ratio of 60:20:20 having weight average molecular weight of 10,000.

A monomer solution was prepared by dissolving t-butylacrylamide (40g) in acrylic acid (120g) and adding to this mixture a solution of AMPS (40g) in water (40g). The monomer solution was charged to a reservoir connected to a metering pump set to deliver the monomer solution at a constant rate over 2 hr.

An initiator solution was prepared by dissolving t-butylperoxypivalate (4g of a 75% solution in mineral spirits) in 84% isopropanol/water (30g). This mixture was charged to a syringe and the syringe was placed in a syringe pump set to deliver the initiator solution at a constant rate over 3 hr.

A one-liter 3-neck round bottom flask equipped with a reflux condenser and nitrogen inlet, a mechanical stirrer, and inlets for monomer and initiator was charged with 84% isopropanol/water (270g). The flask was flushed with nitrogen and held under a slight positive pressure of nitrogen during the polymerization. The solvent was heated to reflux and metering of monomer and initiator was begun simultaneously. At the end of

all metering, the mixture was heated and allowed to reflux for one hour additional. The polymer solution was then sparged with steam to convert it to a solution of polymer in water.

The final product solution contained 38.89% polymer solids by weight, and the acid number of the polymer was 444. The polymer molecular weight was estimated to be 10,000.

## EXAMPLE 2

This example demonstrates threshold inhibition by various polymers, of calcium phosphate, calcium sulfate, and calcium carbonate scale. The tests were carried out in the manner described above for 22 hours to determine percent threshold inhibition of calcium phosphate using the various polymers indicated below. Results of the tests are given below in Table I.

## TABLE I

| Test No. | Copolymer Composition | Wt. Ratio | Mol. Wt. | Polymer Level, ppm | % TI $Ca\text{-}PO_4$ | % TI(a) $Ca\ SO_4$ | % TI(b) $Ca\ CO_3$ |
|---|---|---|---|---|---|---|---|
| 1 | Control | no polymer | | | 0 | 0 | 0 |
| 2 | AA:AMPS | 80:20 | 10,000 | 7.5 | 17(13) | | |
| 3 | AA:AMPS | 70:30 | 10,000 | 7.5 | 52(20) | | |
| 4 | AA:AMPS | 51-49 | 10,000 | 7.5 | 75(31) | | |
| 5 | AA:t-BuAM | 50:50 | 10,000 | 7.5 | 15(13) | 76 | 51 |
| 6 | AA:MAA:t-BuAM:AMPS | 60:20:10:10 | 10,000 | 7.5 | 77(49) | 99 | |
| 7 | AA:t-BuAM:AMPS | 60:20:20 | 10,000 | 7.5 | 83(56) | 97 | 35 |
| 8 | AA:MAA:t-BuAM:AMPS | 30:20:20:30 | 10,000 | 7.5 | 86(50) | 50 | 48 |
| 9 | AA:MAA:i-PrAM:AMPS | 40:10:20:30 | 10,000 | 7.5 | 89(76) | 83 | 27 |
| 10 | AA:MAA:i-PrAM:AMPS | 40:10:30:20 | 10,000 | 7.5 | 81(60) | 73 | 43 |
| 11 | AA:i-PrAM | 50:50 | 10,000 | 7.5 | 65(55) | | 49 |
| 12 | AA:i-PrAM | 50:50 | 17,000 | 7.5 | 17(11) | | |
| 13 | AA:t-BuAM | 80:20 | 12,000 | 7.5 | 50(11) | | |
| 14 | AA:MAA:t-BuAM | 60:20:20 | 10,000 | 7.5 | 53(19) | 99 | |
| 15 | AA:MAA:t-BuAM:AMPS | 40:10:20:30 | 10,000 | 7.5 | 76(55) | 69 | 48 |
| 16 | AA | 100 | 5,000 | 7.5 | 0 (0) | | |
| 17 | AMPS | 100 | 10,000 | 7.5 | 0 | | |
| 18 | AA:DAAM | 80:20 | 10,000 | 7.5 | 41(16) | 98 | 51 |
| 19 | AA:DAAM:AMPS | 60:20:20 | 10,000 | 7.5 | 66(40) | 97 | 49 |
| 20 | AA:MMA | 80:20 | 10,000 | 7.5 | 57(15) | 99 | 36 |
| 21 | AA:MMA:AMPS | 60:20:20 | 10,000 | 7.5 | 56(54) | 98 | 50 |
| 22 | AA:VOAc | 80:20 | 10,000 | 7.5 | 33(12) | | |

TABLE I (cont'd)

| Test No. | Copolymer Composition | Wt. Ratio | Mol. Wt. | Polymer Level, ppm | % TI Ca-$PO_4$ | % TI[a] Ca $SO_4$ | % TI[b] Ca $CO_3$ |
|---|---|---|---|---|---|---|---|
| 23 | AA:VOH | 80:20 | 10,000 | 7.5 | 12(10) | | |
| 24 | AA:VOAc | 70:30 | 10,000 | 7.5 | 39(18) | 98 | 75 |
| 25 | AA:VOH | 70:30 | 10,000 | 7.5 | 15(11) | 99 | 82 |
| 26 | AA:VOAc:AMPS | 60:10:30 | 10,000 | 7.5 | 68(49) | 98 | 55 |
| 27 | AA:VOH:AMPS | 60:10:30 | 10,000 | 7.5 | 56(31) | 99 | 59 |
| 28 | AA:VOAc:AMPS | 50:30:20 | 10,000 | 7.5 | 83(64) | | 58 |
| 29 | AA:VOH:AMPS | 50:30:20 | 10,000 | 7.5 | 51(39) | | 59 |
| 30 | AA:VOAc:AMPS | 50:20:30 | 10,000 | 7.5 | 86 | 88 | |
| 31 | AA:VOH:AMPS | 50:20:30 | 10,000 | 7.5 | 58 | 95 | |
| 32 | AA:AMPS | 90:10 | 10,000 | 10 | 18 | | |
| 33 | AA:AMPS | 80:20 | 10,000 | 10 | 75(19) | | 81 |
| 34 | AA:AMPS | 70:30 | 10,000 | 10 | 91(80) | | |
| 35 | AA:AMPS | 60:40 | 10,000 | 10 | 91(76) | | 62 |
| 36 | AA:AMPS | 51:49 | 10,000 | 10 | 97(95) | 100 | 45 |
| 37 | AA:MAA:tBuAm:AMPS | 60:20:10:10 | 10,000 | 10 | 91(87) | | |
| 38 | AA:tBuAm:AMPS | 60:20:20 | 10,000 | 10 | 89(71) | | |
| 39 | AA:HPA | 67:33 | 10,000 | 10 | 77 | | 21 |
| 40 | AA:HPA:AMPS | 60:30:10 | 10,000 | 10 | 83 | | 16 |
| 41 | AA:iPrAm | 80:20 | 10,000 | 10 | 79 | | |
| 42 | AA:iPrAm | 60:40 | 10,000 | 10 | 88 | | |
| 43 | AA:iPrAm | 50:50 | 10,000 | 10 | 65(59) | 87 | |
| 44 | AA:iPrAm:AMPS | 60:20:20 | 10,000 | 10 | 90(89) | | 50 |
| 45 | AA:iPrAm:AMPS | 70:20:10 | 10,000 | 10 | 91(87) | 97 | |

**TABLE I (cont'd)**

| Test No. | Copolymer Composition | Wt. Ratio | Mol. Wt. | Polymer Level, ppm | % TI $Ca-PO_4$ | % TI(a) Ca $SO_4$ | % TI(b) Ca $CO_3$ |
|---|---|---|---|---|---|---|---|
| 46 | AA:MAA:MeOEA | 60:20:20 | 10,000 | 10 | 90(30) | 99 | 83 |
| 47 | AA:AMPS:MeOEA | 60:20:20 | 10,000 | 10 | 87(88) | 97 | 39 |
| 48 | AA:VOAc:AMPS | 50:20:30 | 10,000 | 10 | 94(87) | | |
| 49 | AA:VOH:AMPS | 50:20:30 | 10,000 | 10 | 87(76) | | |
| 50 | AA:VOAc:AMPS | 60:20:20 | 10,000 | 10 | 91(93) | 98 | 48 |
| 51 | AA:VOH:AMPS | 60:20:20 | 10,000 | 10 | 95(57) | 99 | |
| 52 | AA:VOAc:AMPS | 70:20:10 | 10,000 | 10 | 78(59) | | |
| 53 | AA:VOH:AMPS | 70:20:10 | 10,000 | 10 | 56(30) | | |
| 54 | AA:EMA | 60:40 | 10,000 | 10 | 25(15) | | 59 |
| 55 | AA:EMA:AMPS | 60:20:20 | 10,000 | 10 | 86(77) | 96 | 48 |
| 56 | AA:CMA | 80:20 | 10,000 | 10 | 77(32) | 99 | |
| 57 | AA:CMA:AMPS | 60:20:20 | 10,000 | 10 | 77(79) | | 49 |
| 58 | AA:MAA:CA | 60:20:20 | 10,000 | 10 | 78(36) | | |
| 59 | AA:MAA:AMPS:CA | 54:21:9:16 | 10,000 | 10 | 80(76) | | |
| 60 | AA:MAA:AMPS:CA | 50:20:15:15 | 6,000 | 10 | 89(68) | | |
| 61 | AA:MAA:AMPS:CA | 60:15:10:15 | 14,000 | 10 | 72(56) | | |

(a) Conditions: $[Ca^{++}]$ = 2000 ppm; $[SO_4]$ = 4800 ppm; T = 66°C; time = 24 hr; polymer = 4 ppm

(b) Conditions: $[Ca^{++}]$ = 224 ppm; $[HCO_3]$ = 760 ppm; $[CO_3]$ = 18 ppm; T = 66°C; polymer = 10 ppm

The following contractions appear in the above table:

| | | |
|---|---|---|
| AA | = | acrylic acid |
| MAA | = | methacrylic acid |
| HPA | = | hydroxypropyl acrylate |
| AMPS | = | 2-acrylamido-2-methylpropane sulfonic acid |
| t-BuAm | = | tertiary butyl acrylamide |
| i-PrAm | = | isopropyl acrylamide |
| VOAc | = | vinyl acetate |
| VOH | = | vinyl alcohol |

MeOEA = methoxyethyl acrylate
EMA = ethyl methacrylate
CA = 2-(2-ethoxyethoxylethyl acrylate
DAAm = diacetone acrylamide
MMA = methyl methacrylate
CMA = cellusolve methacrylate

The numbers in parentheses indicate percent threshold inhibition of calcium phosphate in the presence of 1.0 ppm of soluble iron (III).

It has been shown that the copolymers disclosed herein are antiscalants in the presence or absence of soluble metal ions. Copolymers according to the present invention which are required to comprise a copolymerisable primary comonomer selected from styrene sulfonic acids, salts of such acids and mixtures thereof have been filed as technical information after the filing date of the present invention showing to be very effective antiscalants in the presence or absence of soluble iron (III), too. Typical scales encompassed by the present invention include calcium scales such as calcium phosphate, calcium sulfate, and calcium carbonate.

The copolymers described herein can be used in aqueous recirculating systems where the copolymers are effective in reducing deposition of scale in the presence or the absence of soluble metals, such as iron. When an intolerable concentration of scale and/or soluble metal ions in the system is reached, additional copolymer can be added, however, at some point in time, the system is shut down and the aqueous phase is either replaced with a fresh aqueous phase or else the concentrated phase is treated to remove scale and/or soluble metal ions. The concentrated aqueous phase can also be slowly withdrawn and replaced with fresh water.

In reverse osmosis systems, wherein the copolymers can be used, concentration of scale and/or soluble metal ions is monitored until a point is reached when the system cannot operate due to the presence of excessive foulants in the system. At that time, the membranes are treated to reduce or remove the foulant content before placing them again in operation. In such reverse osmosis systems, amount of soluble metals, such as soluble iron, is on the order of up to about 10 ppm, preferably 1-5 ppm.

It has been shown that the terpolymers disclosed herein are effective scale inhibitors in the presence or absence of soluble metal ions. This is surprising since one would expect that such terpolymers would lose their effectiveness against scale in the presence of soluble metal ions.

## Claims

**1.** A method of inhibiting precipitation of scale including calcium phosphate, in an aqueous medium, in the presence or absence of iron, comprising adding to said aqueous medium 0.5 to 500 ppm of an water-soluble copolymer comprising

(a) 20 to 95 % by weight carboxylic monomer selected from acrylic acid, methacrylic acid, salts of such acids and mixtures thereof,

(b) 1 to 60 % by weight of a sulfonic monomer selected from 2-acrylamido-2-methylpropane sulfonic acid, salts of said acid and mixtures thereof,

(c) a copolymerizable primary comonomer selected from styrene sulfonic acids, salts of such acids and mixtures thereof and optionally

(d) up to 20 % by weight of one or more secondary copolymerizable monomers excluding substituted acrylamides, vinyl esters and vinyl acetate,

said copolymerizable primary copolymer being the remainder to 100 % by weight,

said copolymer has a weight average molecular weight in the range of 1,000 to 100,000

**2.** Method of claim 1 wherein amount of said copolymer is 1 to 50 ppm and its molecular weight is in the range of 2,000 to 20,000.

**3.** Method of claim 1 or 2 wherein amount of said secondary monomer is up to 10 % by weight and molecular weight of said copolymer is 2,000 to 20,000.

**4.** Method of claim 3 wherein said aqueous medium is alkaline and is selected from process water used in steam generating systems, recirculating cooling water systems, gas scrubbing systems, desalination water systems, and crude petroleum recovery systems.

5. Method of claim 1 wherein said copolymer has molecular weight of 2,000 to 20,000 and is selected from the following copolymers, given in weight parts: (a) 40 to 90 % acrylic acid, methacrylic acid, and mixtures thereof; (b) 10 to 50 % acrylamido methylpropane sulfonic acid; (c) styrene sulfonic acids, salts of such acids and mixtures thereof, and (d) up to 10 % of one or more other polymerizable monomers, said styrene sulfonic acid being the remainder to 100 % by weight.

6. Method of claims 1 to 5 wherein said styrene sulfonic acids and salts thereof are defined as follows:

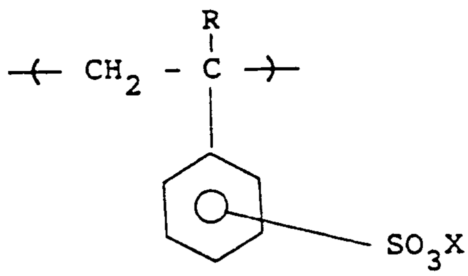

where R is selected from hydrogen and alkyl groups of to 6 carbon atoms, and X is selected from hydrogen, alkali metals, alkaline earth metals, ammonium groups, and mixtures thereof.

7. Method of claim 6 wherein in the formula, R is selected from hydrogen and alkyl groups of 1 to 2 carbon atoms and X is sodium.

8. Method of claim 6 wherein in the formula, R is hydrogen and the $-SO_3X$ group is at the 3 or 4 position on the phenyl ring.

**Patentansprüche**

1. Verfahren zur Verhinderung der Abscheidung von Kesselstein, einschließlich Calciumphosphat, in einem wäßrigen Medium in Gegenwart oder Abwesenheit von Eisen, umfassend das Versetzen des wäßrigen Mediums mit 0,5 bis 500 ppm eines wasserlöslichen Copolymers, umfassend
   (a) 20 bis 95 Gew.-% eines Carbonsäure-Monomers, ausgewählt aus Acrylsäure, Methacrylsäure, Salzen dieser Säuren und Mischungen derselben;
   (b) 1 bis 60 Gew.-% eines Sulfonsäure-Monomers, ausgewählt aus 2-Acrylamido-2-methylpropansulfonsäure, Salzen dieser Säure und Mischungen derselben;
   (c) ein copolymerisierbares primäres Comonomer, ausgewählt aus Styrolsulfonsäuren, Salzen dieser Säuren und Mischungen derselben; und gegebenenfalls
   (d) bis zu 20 Gew.-% eines oder mehrerer sekundärer copolymerisierbarer Monomerer, außer substituierten Acrylamiden, Vinylestern und Vinylacetat, wobei das copolymerisierbare primäre Comonomer den Rest auf 100 Gew.-% darstellt, und wobei das Copolymer ein Gewichtsmittel des Molekulargewichts im Bereich von 1000 bis 100 000 aufweist.

2. Verfahren nach Anspruch 1, wobei sich die Menge an Copolymer auf 1 bis 50 ppm beläuft und das Molekulargewicht im Bereich von 2000 bis 20 000 liegt.

3. Verfahren nach Anspruch 1 oder 2, wobei sich die Menge des sekundären Monomers auf bis zu 10 Gew.-% beläuft, und das Molekulargewicht des Copolymers 2000 bis 20 000 ist.

4. Verfahren nach Anspruch 3, wobei das wäßrige Medium alkalisch ist und ausgewählt ist aus Prozeßwasser, das verwendet wird in Dampferzeugungssystemen, Umwälzkühlwassersystemen, Gaswaschsystemen, Entsalzungswassersystemen und Systemen für die Gewinnung von Rohpetroleum.

5. Verfahren nach Anspruch 1, wobei das Copolymer ein Molekulargewicht von 2000 bis 20 000 aufweist und ausgewählt ist aus folgenden Copolymeren, gegeben in Gewichtsteilen:

(a) 40 bis 90% Acrylsäure, Methacrylsäure und deren Mischungen;
(b) 10 bis 50% Acrylamidomethylpropansulfonsäure;
(c) Styrolsulfonsäuren, Salzen dieser Säuren und Mischungen derselben; und
(d) bis zu 10 Gew.-% eines oder mehrerer anderer polymerisierbarer Monomerer, wobei die Styrolsulfonsäure den Rest auf 100 Gew.-% darstellt.

**6.** Verfahren nach den Ansprüchen 1 bis 5, wobei die Styrolsulfonsäuren und deren Salze wie folgt definiert sind:

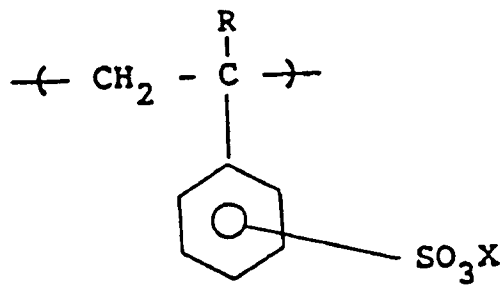

worin R ausgewählt ist aus Wasserstoff und Alkyl-Gruppen mit bis zu 6 Kohlenstoff-Atomen und X ausgewählt ist aus Wasserstoff, Alkalimetallen, Erdalkalimetallen, Ammonium-Gruppen und Mischungen derselben.

**7.** Verfahren nach Anspruch 6, wobei R in der Formel ausgewählt ist aus Wasserstoff und Alkyl-Gruppen mit 1 bis 2 Kohlenstoff-Atomen und X Natrium ist.

**8.** Verfahren nach Anspruch 6, wobei R in der Formel Wasserstoff ist und die $-SO_3X$-Gruppe sich an der 3- oder 4-Position am Phenyl-Ring befindet.

**Revendications**

**1.** Un procédé pour empêcher la précipitation de tartre comprenant du phosphate de calcium, dans un milieu aqueux, en présence ou en l'absence de fer comprenant l'addition audit milieu aqueux de 0,5 à 500 ppm d'un copolymère hydrosoluble renfermant :
(a) 20 à 95 % en poids de monomère carboxylique choisi parmi l'acide acrylique, l'acide méthacrylique, les sels de ces acides et leurs mélanges,
(b) 1 à 60 % en poids d'un monomère sulfonique choisi parmi l'acide 2-acrylamido-2-méthylpropane sulfonique, les sels de cet acide et leurs mélanges,
(c) un comonomère primaire copolymérisable choisi parmi les acides styrène-sulfoniques, les sels de ces acides et leurs mélanges, et éventuellement
(d) jusqu'à 20 % en poids d'un ou plusieurs monomères secondaires copolymérisables à l'exclusion des acrylamides substitués, des esters de vinyle et de l'acétate de vinyle,
ledit copolymère primaire copolymérisable constituant la partie restante pour avoir 100 % en poids,
ledit copolymère a un poids moléculaire moyen en poids compris dans la gamme de 1.000 à 100.000.

**2.** Procédé selon la revendication 1, dans lequel la quantité dudit copolymère est de 1 à 50 ppm et son poids moléculaire est compris dans la gamme de 2.000 à 20.000.

**3.** Procédé selon la revendication 1 ou 2, dans lequel la quantité dudit monomère secondaire représente jusqu'à 10 % en poids et le poids moléculaire dudit copolymère est de 2.000 à 20.000.

**4.** Procédé selon la revendication 3, dans lequel ledit milieu aqueux est alcalin et est choisi parmi l'eau de traitement utilisée dans les systèmes de génération de vapeur d'eau, les systèmes de recyclage d'eau froide, les systèmes d'épuration de gaz, les systèmes de dessalage d'eau et les systèmes de

récupération de pétrole brut.

**5.** Procédé selon la revendication 1, dans lequel ledit copolymère a un poids moléculaire de 2.000 à 20.000 et est choisi parmi les copolymères ci-après, exprimé en parties en poids : (a) 40 à 90 % d'acide acrylique, d'acide méthacrylique et leurs mélanges, (b) 10 à 50 % d'acide acrylamido-méthylpropane-sulfonique, (c) d'acides styrène-sulfoniques, les sels de ces acides et leurs mélanges, et (d) jusqu'à 10 % d'un ou plusieurs autres monomères polymérisables, ledit acide styrène-sulfonique constituant la partie restante pour avoir 100 % en poids.

**6.** Procédé selon l'une quelconque des revendications 1 à 5, dans lequel lesdits acides styrène-sulfoniques et leurs sels sont définis comme suit :

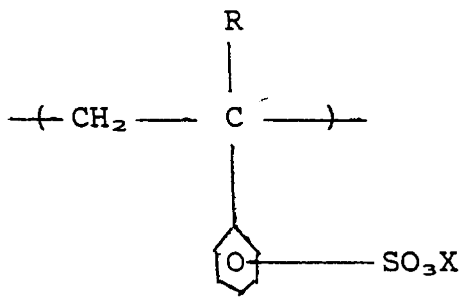

où R est choisi parmi l'hydrogène et des radicaux alkyles ayant jusqu'à 6 atomes de carbone et X est choisi parmi l'hydrogène, les métaux alcalins, les métaux alcalino-terreux, les groupes ammonium et leurs mélanges.

**7.** Procédé selon la revendication 6, dans lequel, dans la formule, R est choisi parmi l'hydrogène et les radicaux alkyles ayant de 1 à 2 atomes de carbone et X est le sodium.

**8.** Procédé selon la revendication 6, dans lequel, dans la formule, R est l'hydrogène et le groupe $-SO_3X$ est en position 3 ou 4 sur le noyau phényle.